# EUROPEAN PATENT APPLICATION

(11) **EP 4 726 265 A2**
(43) Date of publication of application: **15.04.2026**
(21) Application number: 26161351.7
(22) Date of filing: 22.01.2024
(51) Int. Cl.: F24C 15/32

(54) **OVEN HAVING A MOVABLE JET PLATE**

(30) Priority: 25.01.2023 US 202318101433
(62) Divisional of application: 24747590.8
(71) Applicant: G.S. Blodgett, LLC, Essex Junction, VT 05452 (US)
(72) Inventor: MCKEE, Philip R., 75230 Dallas, TX (US); VANLANEN, Lee, 75069 McKinney, TX (US); TASMAN, Glenn, 75204 Dallas, TX (US); POOL III, James Kelly, 75033 Frisco, TX (US)
(74) Representative: Herrero & Asociados, S.L.

(57) **Abstract**

An oven includes a cooking chamber, a blower, an air plenum configured to receive air from the blower, and first and second jet plates disposed within the cooking chamber and configured to direct a flow of air from the air plenum into the cooking chamber to cook the food product. Each one of the first and second jet plates includes one or more openings. At least one of the first and second jet plates is movable relative to the other jet plate to provide, in a first configuration, an impingement air stream to the cooking chamber and, in a second configuration, a convection air stream to the cooking chamber. At least one of the first and second jet plates is movable relative to the other jet plate to periodically oscillate, during a single cook setting, to provide an impingement air stream to first and second areas of a food product.

## Description

### CROSS REFERENCE TO RELATED APPLICATIONS

This application claims the benefit of, and priority to, U.S. Patent Application No. 18/101,433, filed on January 25, 2023; the contents of which are incorporated herein by reference in their entirety.

### FIELD OF THE INVENTION

The present invention relates to cooking appliances in general and, in particular, to a hot-air oven having a movable jet plate.

### BACKGROUND OF THE INVENTION

Food-service operators that desire to cook a wide variety of food products frequently use different types of hot air ovens to cook different types of foods. For example, for optimal cook quality in the shortest cook times, bakery items or frozen biscuits might be cooked in a convection oven and pizza might be cooked in an air impingement oven. Conventional hot-air ovens having multiple cooking chambers can cook different types of foods, but they are not well-suited to cook foods that are traditionally cooked in convection ovens and also cook foods that are traditionally cooked in air-impingement ovens within the cook times and quality standards that are traditionally achieved in competitive convection ovens and impingement ovens.

Accordingly, there is a need for an improved hot-air oven having multiple cooking chambers which overcomes the problems identified above.

### SUMMARY OF THE INVENTION

It has now been found that the above and related objects of the present invention are obtained in the form of several related aspects, including an oven having a movable jet plate.

In accordance with an exemplary embodiment of the present invention, an oven comprises a cooking chamber, a blower, an air plenum configured to receive air from the blower, and first and second jet plates disposed within the cooking chamber and configured to direct a flow of air from the air plenum into the cooking chamber. Each one of the first and second jet plates includes a plurality of openings and at least one of the first and second jet plates is movable relative to the other jet plate to provide, in a first configuration, an air stream having a first heat transfer characteristic to the cooking chamber and to provide, in a second configuration, an air stream having a second heat transfer characteristic to the cooking chamber.

In embodiments, the first jet plate is fixed and the second jet plate is movable relative to the first jet plate.

In embodiments, the first and second jet plates are movable relative to each other.

In embodiments, the air stream having the first heat transfer characteristic has a thermal transfer coefficient h which is greater than about 41 Watt/m²K.

In embodiments, the first heat transfer characteristic is an impingement heat transfer characteristic.

In embodiments, the air stream having the second heat transfer characteristic has a thermal transfer coefficient h which is less than about 40 Watt/m²K.

In embodiments, the second heat transfer characteristic is a convection heat transfer characteristic.

In embodiments, the plurality of openings in the first jet plate comprises a plurality of holes.

In embodiments, in the first configuration, some of the plurality of holes are open and the rest of the plurality of holes are closed.

In embodiments, in the first configuration, about half of the plurality of holes are open and about half of the plurality of holes are closed.

In embodiments, in the second configuration, all of the plurality of holes are open and have a reduced diameter.

In embodiments, the total area of the open holes in the first configuration is substantially the same as the total area of the open holes in the second configuration.

In embodiments, the flow of air from the air plenum into the cooking chamber is even across the first and second jet plates in the first configuration and in the second configuration.

In accordance with an exemplary embodiment of the present invention, an oven comprises a cooking chamber configured to receive a food product, a blower, an air plenum configured to receive air from the blower, and first and second jet plates disposed within the cooking chamber and configured to direct a flow of air from the air plenum into the cooking chamber to cook the food product. Each one of the first and second jet plates includes one or more openings and at least one of the first and second jet plates is movable relative to the other jet plate to periodically oscillate, during a single cook setting, between a first configuration in which the first and second jet plates provide an air stream to a first area of the food product and a second configuration in which the first and second jet plates provide the air stream to a second area of the food product.

In embodiments, the first jet plate is fixed and the second jet plate is movable relative to the first jet plate.

In embodiments, the first jet plate and the second jet plate are movable relative to each other.

In embodiments, the single cook setting comprises an impingement cook setting.

In embodiments, the air stream has an impingement heat transfer characteristic.

In embodiments, the air stream has a thermal transfer coefficient h which is greater than about 41 Watt/m²K.

In accordance with an exemplary embodiment of the present invention, a jet plate assembly for directing a flow of air into a cooking chamber of an oven comprises a first jet plate including one or more openings and disposed within the cooking chamber, a second jet plate including one or more openings and disposed vertically adjacent the first jet plate, and a mechanism configured to move at least one of the first and second jet plates relative to the other jet plate to provide, in a first configuration, an air stream having a first heat transfer characteristic and to provide, in a second configuration, an air stream having a second heat transfer characteristic.

In embodiments, the first jet plate is fixed and the second jet plate is movable in a forward and a rearward direction relative to the first jet plate.

In embodiments, the first jet plate and the second jet plate are movable from side-to-side relative to each other.

In embodiments, the first jet plate and second jet plate are movable in a forward and a rearward direction relative to each other.

In embodiments, the first jet plate and the second jet plate are movable from side-to-side relative to each other.

In embodiments, the air stream having the first heat transfer characteristic has a thermal transfer coefficient h which is greater than about 41 Watt/m²K.

In embodiments, the first heat transfer characteristic is an impingement heat transfer characteristic.

In embodiments, the air stream having the second heat transfer characteristic has a thermal transfer coefficient h which is less than about 40 Watt/m²K.

In embodiments, the second heat transfer characteristic is a convection heat transfer characteristic.

In embodiments, the mechanism comprises a Y-shaped member coupled to at least one of the first and second jet plates, wherein the at least one of the first and second jet plates moves in response to rotation of the Y-shaped member.

In accordance with an exemplary embodiment of the present invention, a jet plate assembly for directing a flow of air into a cooking chamber of an oven comprises a first jet plate including one or more openings and disposed within the cooking chamber, a second jet plate including one or more openings and disposed vertically adjacent the first jet plate, and a mechanism configured to move at least one of the first and second jet plates relative to the other jet plate to periodically oscillate, during a single cook setting, between a first configuration in which the first and second jet plates provide an air stream to a first area of the food product and a second configuration in which the first and second jet plates provide the air stream to a second area of the food product.

In embodiments, the first jet plate is fixed and the second jet plate is movable in a forward and a rearward direction relative to the first jet plate.

In embodiments, the first jet plate is fixed and the second jet plate is movable from side-to-side relative to the first jet plate.

In embodiments, the first jet plate and second jet plate are movable in a forward and a rearward direction relative to each other.

In embodiments, the first jet plate and the second jet plate are movable from side-to-side relative to each other.

In embodiments, the single cook setting comprises an impingement cook setting.

In embodiments, the air stream has an impingement heat transfer characteristic.

In embodiments, the air stream has a thermal transfer coefficient h which is greater than about 41 Watt/m²K.

In embodiments, the mechanism comprises a Y-shaped member coupled to at least one of the first and second jet plates, wherein the at least one of the first and second jet plates moves in response to rotation of the Y-shaped member.

### BRIEF DESCRIPTION OF THE DRAWINGS

The following detailed description, given by way of example and not intended to limit the present invention solely thereto, will best be understood in conjunction with the accompanying drawings in which:
FIG. 1 is a perspective view of a movable jet plate in a first configuration in accordance with an exemplary embodiment of the present invention.
FIG. 2 is a perspective view of a movable jet plate in a second configuration in accordance with an exemplary embodiment of the present invention.
FIG. 3 illustrates a convection configuration for a jet plate assembly in accordance with an exemplary embodiment of the present invention.
FIG. 4 provides another view of the convection configuration for a jet plate assembly shown in FIG. 3.
FIG. 5 illustrates an impingement configuration for a jet plate assembly in accordance with an exemplary embodiment of the present invention.
FIG. 6 provides another view of the impingement configuration for a jet plate assembly shown in FIG. 5.
FIG. 7 depicts a first impingement configuration for a jet plate assembly which oscillates between two impingement configurations.
FIG. 8 depicts a second impingement configuration for a jet plate assembly which oscillates between two impingement configurations.
FIG. 9 illustrates a drive mechanism for a jet plate assembly in accordance with an exemplary embodiment of the present invention.
FIG. 10 illustrates a drive mechanism for a jet plate assembly in accordance with an exemplary embodiment of the present invention.
FIG. 11 illustrates a method for providing a vertical spacing between jet plates in a jet plate assembly in accordance with an exemplary embodiment of the present invention.
FIG. 12 illustrates another method for providing a vertical spacing between jet plates in a jet plate assembly in accordance with an exemplary embodiment of the present invention.
FIG. 13 illustrates a cross-sectional view of an oven in accordance with an exemplary embodiment of the present invention.
FIG. 14 illustrates a multi-chamber oven in accordance with an exemplary embodiment of the present invention.

### DETAILED DESCRIPTION OF EXEMPLARY EMBODIMENTS

In the present disclosure, like reference numbers refer to like elements throughout the drawings, which illustrate various exemplary embodiments of the present invention.

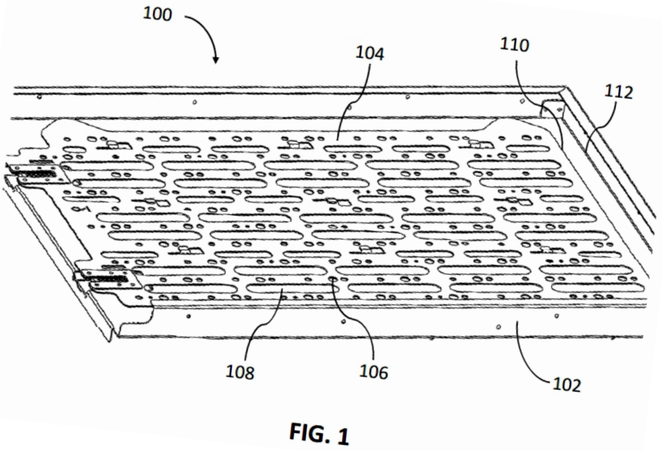

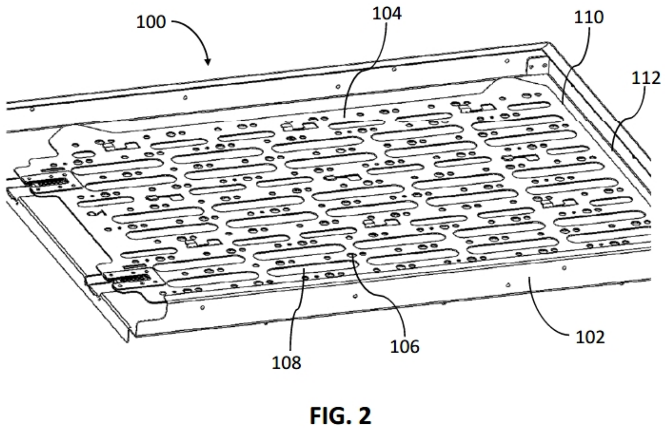

Referring now to the drawings and in particular to FIGS. 1 and 2, there is depicted a jet plate assembly 100 for introducing air into a cooking chamber of an oven in accordance with an exemplary embodiment of the present invention. Jet plate assembly 100 includes an outer jet plate 102 which is fixed and an inner jet plate 104 which is disposed vertically adjacent outer jet plate 102 and is movable forward and rearward and/or from side-to-side relative to outer jet plate 102. In alternative embodiments in accordance with the present invention, jet plates 102, 104 are both movable forward and rearward and/or side-to-side relative to each other.

FIG. 1 depicts inner jet plate 104 disposed in a rearward position relative to outer jet plate 102 (i.e., where front edge 110 of inner jet plate 104 is furthest away from front edge 112 of outer jet plate 102). FIG. 2 depicts inner jet plate 104 disposed in a forward position relative to outer jet plate 102 (i.e., where front edge 110 of inner jet plate 104 is closest to front edge 112 of outer jet plate 102). As mentioned above, in alternative embodiments, inner jet plate 104 can move side-to-side relative to outer jet plate 102 (i.e., where the side edges of inner jet plate 104 are closest to the corresponding side edges of outer jet plate 102).

As discussed in detail below, the benefit of moving inner jet plate 104 forward and rearward (and/or from side-to-side) relative to outer jet plate 102 is that it changes the heat transfer characteristic of an air stream provided to an oven by jet plate assembly 100 between an impingement characteristic and a convection characteristic. In terms of the thermal heat transfer coefficient (h), an air stream having a thermal heat transfer coefficient h which is less than about 40 Watt/m²K is considered to indicate a convection heat transfer characteristic and an air stream having a thermal heat transfer coefficient h which is greater than about 41 Watt/m²K is considered to indicate an impingement heat transfer characteristic.

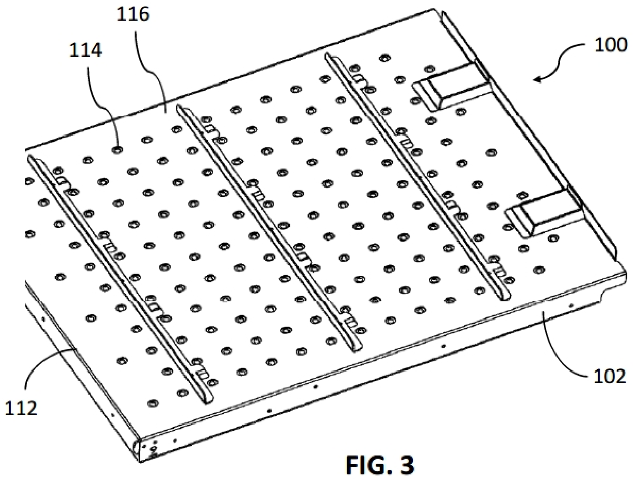

As shown in FIG. 2, a plurality of openings, such as holes 106 and slots 108, are formed in inner jet plate 104. Referring now to FIG. 3, a plurality of openings, such as holes 114, are formed in a surface 116 of outer jet plate 102. In accordance with exemplary embodiments of the present invention, the openings in jet plates 102, 104 are configured such that the air passing through jet plates 102, 104 exits jet plate assembly 100 at substantially similar velocities from all areas across jet plate assembly 100 (i.e., the front of jet plate assembly 100, the back of jet plate assembly 100, each side of jet plate assembly 100, and the center of jet plate assembly 100). This is the case when jet plate assembly 100 is configured in an impingement configuration (described below) and also when jet plate assembly 100 is configured in a convection configuration (described below), although the exit velocities of the air in the impingement configuration will be different than the exit velocities of the air in the convection configuration.

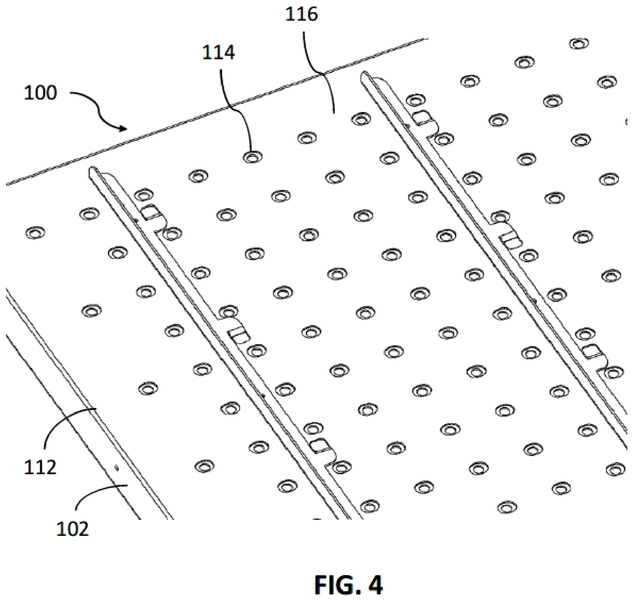

In accordance with an exemplary embodiment of the present invention, the relative movement between inner jet plate 104 and outer jet plate 102 causes the holes 114 to be either fully open, partially open (i.e., open but with a reduced diameter), or closed. FIGS. 3 and 4 depict a configuration for jet plate assembly 100 in which inner jet plate 104 has been moved relative to outer jet plate 102 such that all of the holes 114 of the surface 116 are open but with a reduced diameter (i.e., partially open). This configuration of jet plate assembly 100 is considered to be a convection configuration because all of the holes 114 are being used but each one is effectively smaller. Thus, the air provided to the cooking chamber of an oven by holes 114 in the convection configuration of jet plate assembly 100 is gently applied, vertically-disposed air having a temperature of about 350°F, which is suitable to cook food products such as pastry products or frozen biscuits.

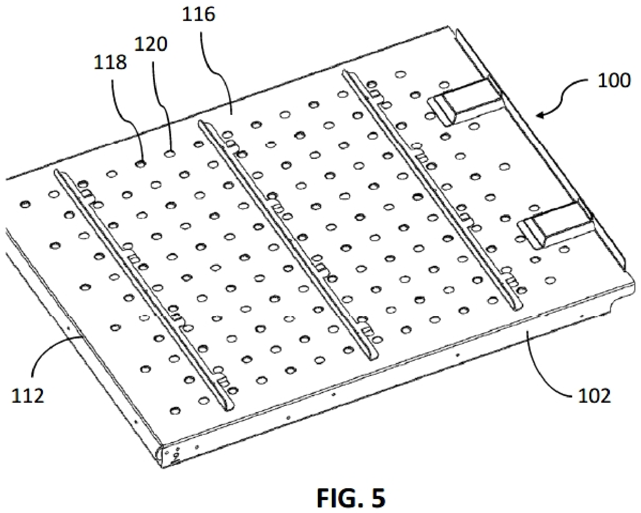

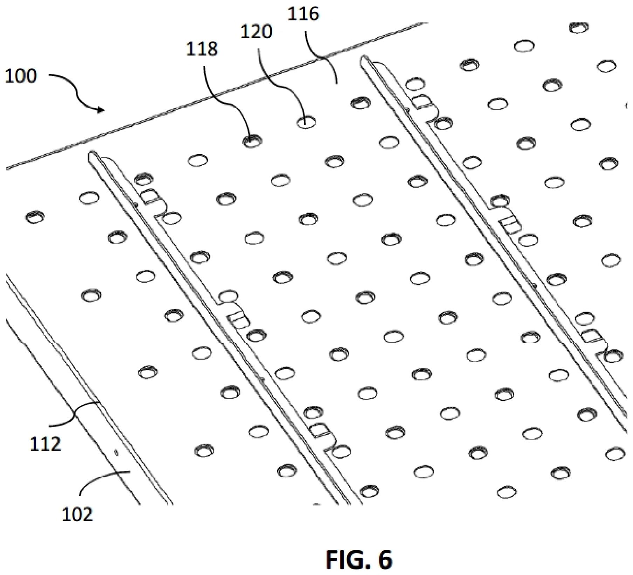

FIGS. 5 and 6 depict a configuration for jet plate assembly 100 in which inner jet plate 104 has been moved relative to outer jet plate 102 such that half of the holes 118 of the surface 116 are open and half of the holes 120 are closed. This configuration of jet plate assembly 100 is considered to be an impingement configuration because only half of the holes 118 are being used but each one is fully open. Thus, the air provided to the cooking chamber of an oven by holes 118 in the impingement configuration of jet plate assembly 100 is high velocity air which is suitable to cook food products such as a 16-inch pizza or frozen chicken wings when applied at a temperature of about 500°F.

The purpose of providing smaller diameter holes 114 in the convection configuration of jet plate assembly 100 (where all of the holes 114 are open) and providing larger diameter holes 118 in the impingement configuration of jet plate assembly 100 (where some of the holes are closed) is to keep the same total area of open holes between the two configurations. In theory, this will keep the internal pressures within jet plate assembly 100 similar between both configurations, which will result in even airflow across the entire jet plate assembly 100 in either configuration.

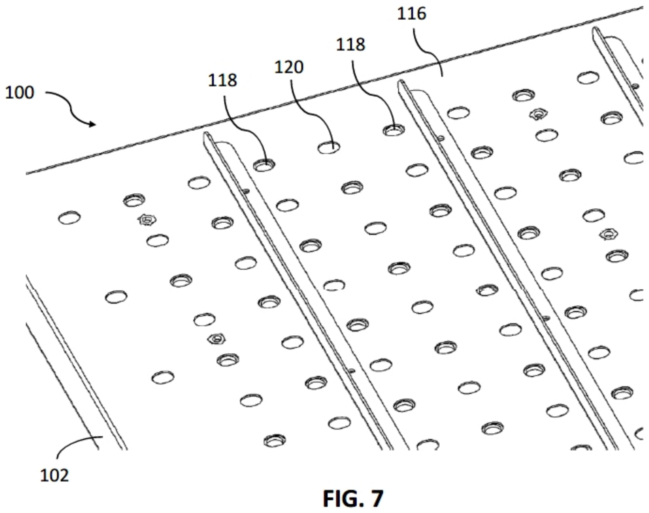

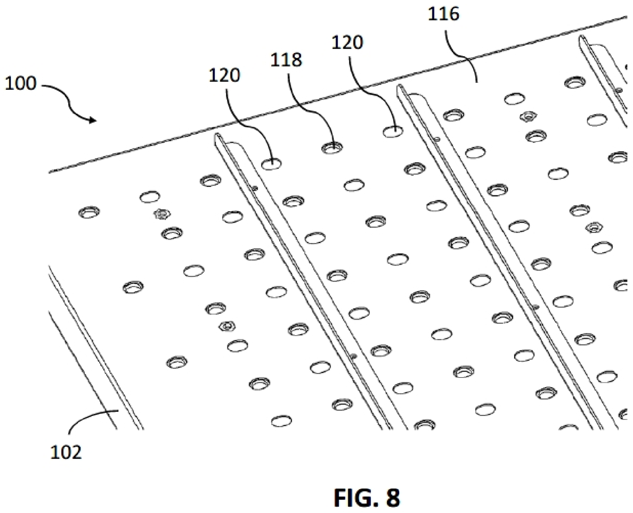

FIGS. 7 and 8 depict a configuration for jet plate assembly 100 in which inner jet plate 104 is moved relative to outer jet plate 102 such that the jet plate assembly 100 oscillates between two impingement configurations. As shown in FIGS. 7 and 8, in one impingement configuration half of the holes 118 are open and half of the holes 120 are closed. As shown in FIG. 8, in the second impingement configuration, the open holes 118 shown in FIG. 7 become closed holes 120. The benefit of this dual-impingement configuration is that it reduces spotting on the food product. Specifically, heat intensity is moved from an already hot area of the food product to a colder area of the food product by moving the inner jet plate 104 forward or rearward (and/or from side-to-side) relative to the outer jet plate 102. This gives the hot area of the food product time to rest and to dissipate heat while another area of the food product is heated.

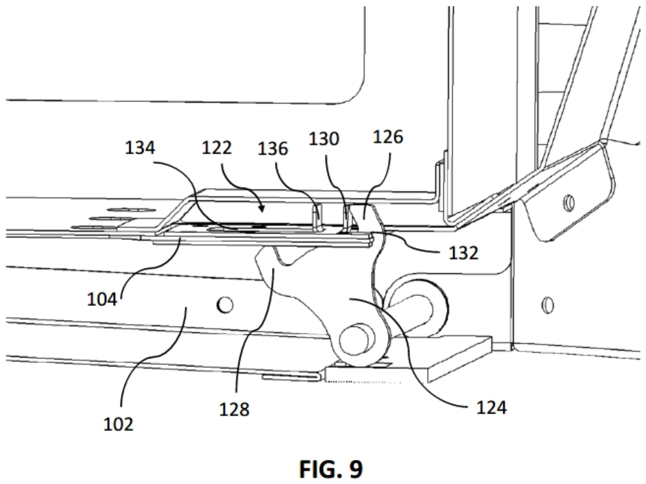

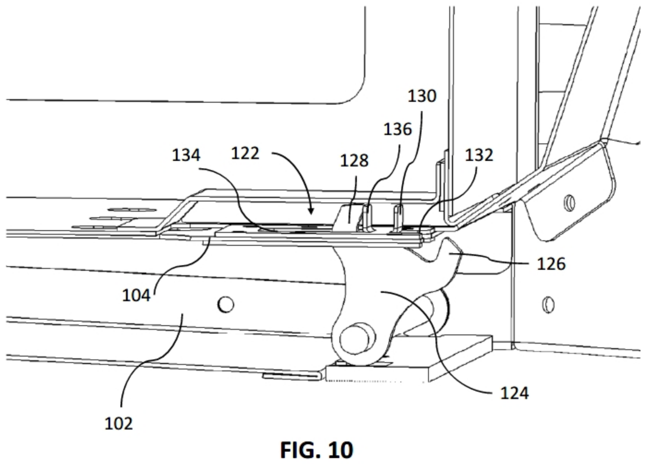

FIGS. 9 and 10 depict the operation of a drive mechanism 122 for moving inner jet plate 104 forward and rearward relative to outer jet plate 102. FIG. 9 depicts movement of inner jet plate 104 forward relative to outer jet plate 102. Y-shaped member 124 is rotated counter-clockwise, thereby causing portion 126 of Y-shaped member 124 to enter a slot 132 of inner jet plate 104. As Y-shaped member 124 continues to rotate, portion 126 of Y-shaped member 124 comes into contact with tab 130 of inner jet plate 104 to move inner jet plate 104 forward relative to outer jet plate 102.

FIG. 10 depicts movement of inner jet plate 104 rearward relative to outer jet plate 102. Y-shaped member 124 is rotated clockwise, thereby causing portion 128 of Y-shaped member 124 to enter a slot 134 of inner jet plate 104. As Y-shaped member 124 continues to rotate, portion 128 of Y-shaped member 124 comes into contact with tab 136 of inner jet plate 104 to move inner jet plate 104 rearward relative to outer jet plate 102.

In alternative embodiments, where jet plate 102 is also movable, a drive mechanism 122 can also be provided to move jet plate 102 forward and rearward relative to jet plate 104. In alternative embodiments, where jet plate 102 and/or jet plate 104 are movable from side-to-side relative to each other, one or more drive mechanisms, such as drive mechanism 122, can be provided to move jet plate 102 and/or jet plate 104 from side-to-side.

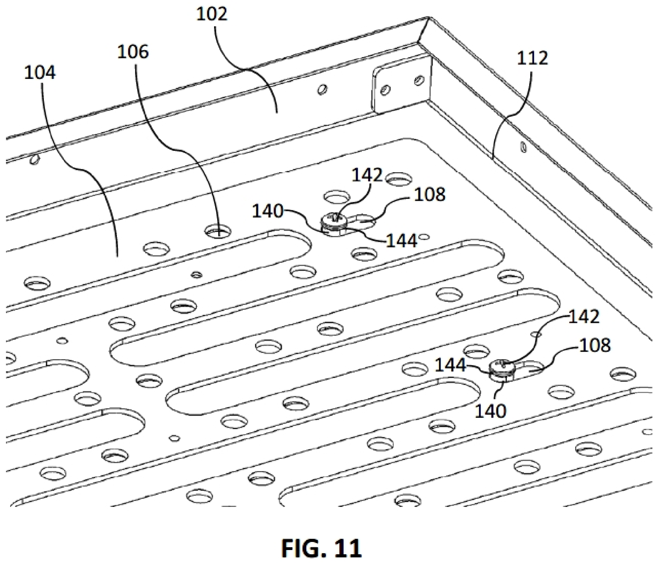

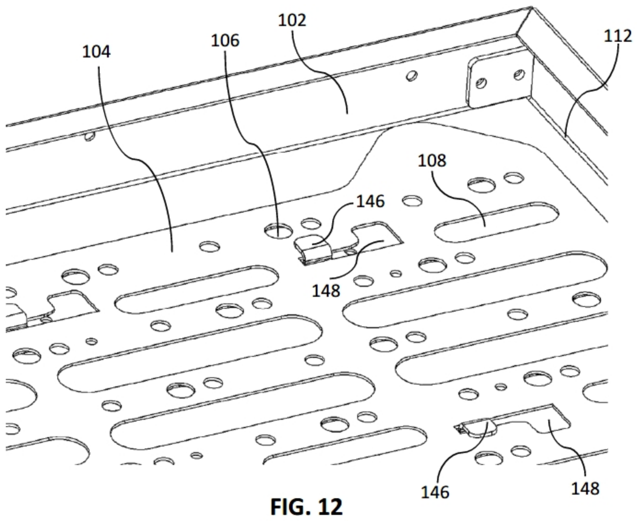

FIGS. 11 and 12 depict two methods that can be used to provide a vertical spacing between the inner jet plate 104 and the outer jet plate 102. As shown in FIG. 11, a threaded post 140 is provided between outer jet plate 102 and inner jet plate 104 through a slot 108 at several locations. A screw 142 and a washer 144, both of which have a larger diameter than that of the threaded post 140, are provided with threaded post 140 to maintain the vertical spacing between outer jet plate 102 and inner jet plate 104 while allowing relative movement between outer jet plate 102 and inner jet plate 104 in the forward and rearward directions (and/or from side-to-side).

In an alternative embodiment shown in FIG. 12, at several locations a tab 146 is provided between outer jet plate 102 and inner jet plate 104 through a slot 148 that tab 146 fits into. Tab 146 and its corresponding slot 148 maintain the vertical spacing between outer jet plate 102 and inner jet plate 104 while allowing relative movement between outer jet plate 102 and inner jet plate 104 in the forward and rearward directions (and/or from side-to-side).

Providing a vertical spacing between outer jet plate 102 and inner jet plate 104 helps to control warping of the outer jet plate 102 and the inner jet plate 104 while they heat up in a cooking chamber of an oven. Controlling the warping of the outer jet plate 102 and the inner jet plate 104 increases the probability of getting consistent cooking results.

In preferred embodiments, jet plate assembly 100, including outer jet plate 102 and inner jet plate 104, is fabricated from stainless steel to enable jet plate assembly 100 to best withstand the environment in the cooking chamber of an oven (e.g., high temperatures, presence of grease). However, other materials may be used in alternative embodiments.

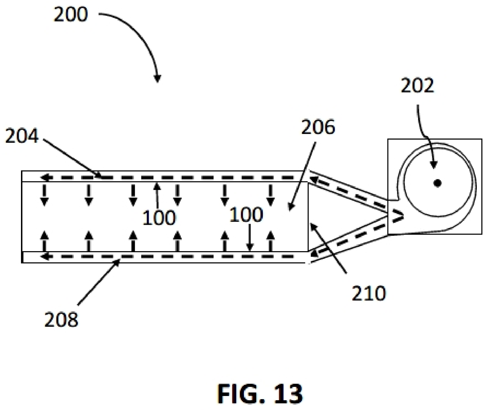

FIG. 13 depicts a cross-sectional view of an oven 200 in accordance with an exemplary embodiment of the present invention. As shown in FIG. 13, an air blower system 202 sends heated air to an air plenum 204 above a cooking chamber 206 and to an air plenum 208 below cooking chamber 206 through openings in a rear wall 210. The heated air received in air plenum 204 is then directed downward to cooking chamber 206 through a top jet plate assembly 100. The heated air received in air plenum 208 is directed upward to cooking chamber 206 through in bottom jet plate assembly 100. Once it enters cooking chamber 206, the heated air comes into contact with any food product placed on one or more food racks (not shown) within cooking chamber 206. Afterwards, the air within cooking chamber 206 may be drawn towards return air opening(s) on one or more oven chamber walls (not shown) and travel back to air blower system 202. As described herein, oven 200 includes a jet plate assembly 100 for both air plenum 204 and air plenum 208 of oven 200. In alternative embodiments, oven 200 may include a jet plate assembly 100 for only air plenum 204 or for only air plenum 208.

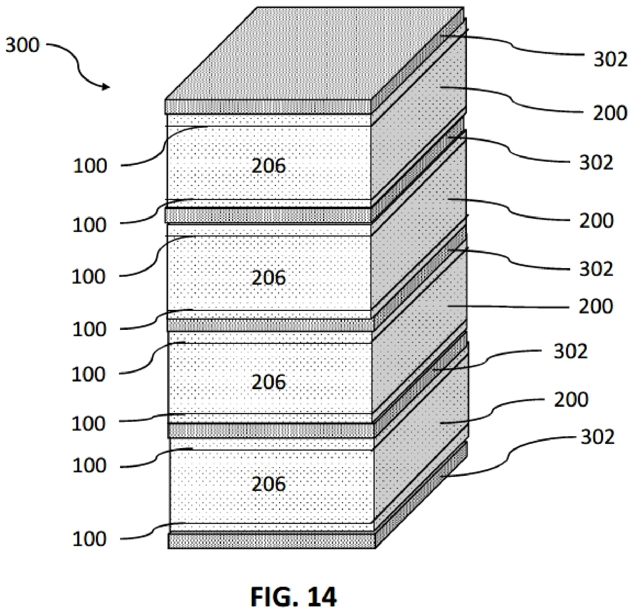

FIG. 14 illustrates a multi-chamber oven 300 in accordance with an exemplary embodiment of the present invention. In a preferred embodiment, oven 300 has four cooking chambers (i.e., is a "Quad Batch" oven), but oven 300 can have more or fewer than four cooking chambers. As shown in FIG. 14, the four cooking chambers of oven 300 comprise the cooking chambers 206 of four independent, stacked ovens 200. Each of the ovens 200 comprises a jet plate assembly 100 in both a top portion and a bottom portion of cooking chamber 206. (As mentioned above, in alternative embodiments, each of the ovens 200 may comprise a jet plate assembly 100 in only a top portion or only a bottom portion of cooking chamber 206.) Each of the ovens 200 is separated by insulation 302. The separation between ovens 200 and the insulation 302 provided between ovens 200 enables an extended temperature differential (for example, greater than about 75°F) between adjacent cooking chambers 206 in oven 300.

As has been described, in accordance with embodiments of the present invention, an oven can quickly and evenly "convection cook" foods that want gently applied, 350°F air (such as frozen biscuits) or quickly and evenly "impingement cook" foods that want high velocity, 500°F air (such as a 16" pizza), as desired. This feature of "situational air flow" (i.e., convection cooking or impingement cooking in the oven depending on the food being cooked therein) is implemented by at least one jet plate that is movable relative to another jet plate to change the heat transfer characteristic of an air stream provided to the oven between an impingement heat transfer characteristic and a convection heat transfer characteristic. In a hot-air oven that has multiple cooking chambers, separation and insulation between the multiple cooking chambers enables an extended temperature differential between adjacent cooking chambers.

While this invention has been described in conjunction with exemplary embodiments outlined above and illustrated in the drawings, it is evident that many alternatives, modifications and variations in form and detail will be apparent to those skilled in the art. Accordingly, the exemplary embodiments of the invention, as set forth above, are intended to be illustrative, not limiting, and the spirit and scope of the present invention is to be construed broadly and limited only by the appended claims, and not by the foregoing specification.

## Claims

1. An oven, comprising:
a cooking chamber configured to receive a food product;
a blower;
an air plenum configured to receive air from the blower; and
first and second jet plates disposed within the cooking chamber and configured to direct a flow of air from the air plenum into the cooking chamber to cook the food product;
wherein:
each one of the first and second jet plates includes one or more openings; and
at least one of the first and second jet plates is movable relative to the other jet pi ate to periodically oscillate, during a single cook setting, between a first configuration in which the first and second jet plates provide an air stream to a first area of the food product and a second configuration in which the first and second jet plates provide the air stream to a second area of the food product.

2. The oven of claim 1, wherein the first jet plate is fixed and the second jet plate is movable relative to the first jet plate.

3. The oven of claim 1, wherein the first jet plate and the second jet plate are movable relative to each other.

4. The oven of claim 1, wherein the single cook setting comprises an impingement cook setting.

5. The oven of claim 1, wherein the air stream has an impingement heat transfer characteristic.

6. The oven of claim 1, wherein the air stream has a thermal transfer coefficient h which is greater than about 41 Watt/m2K.

7. A jet plate assembly for directing a flow of air into a cooking chamber of an oven, the jet plate assembly comprising:
a first jet plate including one or more openings and disposed within the cooking chamber;
a second jet plate including one or more openings and disposed vertically adjacent the first jet plate; and
a mechanism configured to move at least one of the first and second jet plates relative to the other jet plate to periodically oscillate, during a single cook setting, between a first configuration in which the first and second jet plates provide an air stream to a first area of the food product and a second configuration in which the first and second jet plates provide the air stream to a second area of the food product.

8. The jet plate assembly of claim 7, wherein the first jet plate is fixed and the second jet plate is movable in a forward and a rearward direction relative to the first jet plate.

9. The jet plate assembly of claim 7, wherein the first jet plate is fixed and the second jet plate is movable from side-to-side relative to the first jet plate.

10. The jet plate assembly of claim 7, wherein the first jet plate and the second jet plate are movable in a forward and a rearward direction relative to each other.

11. The jet plate assembly of claim 7, wherein the first jet plate and the second jet plate are movable from side-to-side relative to each other.

12. The jet plate assembly of claim 7, wherein the single cook setting comprises an impingement cook setting.

13. The jet plate assembly of claim 7, wherein the air stream has an impingement heat transfer characteristic.

14. The jet plate assembly of claim 7, wherein the air stream has a thermal transfer coefficient h which is greater than about 41 Watt/m2K.

15. The jet plate assembly of claim 7, wherein the mechanism comprises a Y-shaped member coupled to the at least one of the first and second jet plates, wherein the at least one of the first and second jet plates moves in response to rotation of the Y-shaped member.
